# EUROPÄISCHE PATENTSCHRIFT

(11) **EP 3 384 353 B1**
(45) Veröffentlichungstag und Bekanntmachung des Hinweises auf die Patenterteilung: **14.04.2021**
(21) Anmeldenummer: 16795022.9
(22) Anmeldetag: 11.11.2016
(51) Int. Cl.: G05B 19/042

(54) **VERFAHREN UND SYSTEM ZUR OPTIMIERUNG DER BEDIENUNG VON ZUMINDEST EINEM EINER VIELZAHL VON FELDGERÄTEN DER AUTOMATISIERUNGSTECHNIK**
METHOD AND SYSTEM FOR OPTIMIZING THE OPERATION OF AT LEAST ONE OF A PLURALITY OF FIELD DEVICES FROM AUTOMATION TECHNOLOGY
PROCÉDÉ ET SYSTÈME D'OPTIMISATION DE LA COMMANDE D'AU MOINS UN APPAREIL DE CHAMP D'UNE PLURALITÉ D'APPAREILS DE CHAMP DU SECTEUR DE LA ROBOTIQUE

(30) Priorität: 30.11.2015 DE 102015120734
(43) Veröffentlichungstag der Anmeldung: 10.10.2018
(73) Patentinhaber: Endress+Hauser Process Solutions AG, 4153 Reinach (CH)
(72) Erfinder: NICK, Markus, 68680 Kembs (FR); BARET, Marc, 68680 Kembs (FR); HAUSS, Georg, 79102 Freiburg (DE); KAISER, Ulrich, 4057 Basel (CH); MANEVAL, Michael, 79650 Schopfheim (DE)
(74) Vertreter: Andres, Angelika Maria
(86) Internationale Anmeldenummer: PCT/EP2016/077389
(87) Internationale Veröffentlichungsnummer: WO 2017/093001

(56) Entgegenhaltungen:
- WO-A1-2006/069762
- WO-A1-2009/049656
- DE-A1-102007 063 312

## Beschreibung

Die Erfindung betrifft ein Verfahren und ein System zur Optimierung der Bedienung von zumindest einem einer Vielzahl von Feldgeräten in einer Anlage der Automatisierungstechnik, die in unterschiedlichen Applikationen eingesetzt sind.

Aus dem Stand der Technik sind bereits Feldgeräte bekannt geworden, die in industriellen Anlagen zum Einsatz kommen. In der Automatisierungstechnik, insbesondere der Prozessautomatisierung und der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, pH-Messung, Durchflussmessung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

Feldgeräte, die in eine neue Applikation einer Prozessanlage integriert werden, oder Austauschfeldgeräte, die ein veraltetes oder defektes Feldgerät einer Applikation ersetzen, müssen spezifisch auf jeweilige Applikation angepasst werden. Dafür werden diese Feldgeräte während oder nach der Fertigung konfiguriert und parametriert. Die Konfiguration beschreibt zum einen die hardwareseitige Konfiguration, beispielsweise das Flanschmaterial eines Durchflussmessgerätes, als auch die softwareseitige Konfiguration. Unter Parametrierung versteht man das Definieren und Festlegen von Parametern, mit deren Hilfe der Betrieb des Feldgerätes auf die jeweiligen Merkmale der Applikation, beispielsweise das Messmedium, eingestellt wird.

Ab Werk besitzen alle Feldgeräte eines gleichen Gerätetyps und/oder einer gleichen Konfiguration dieselbe Anzahl an Parametern und denselben, voreingestellten Standardparametersatz. Die spezifische Anpassung einzelner Parameter ist durch die mitunter hohe Anzahl an Parametern, oftmals bis zu mehreren hundert verschiedenen Parametern, äußerst komplex und mit einem hohen manuellen Aufwand verbunden. Für den Kunden ist eine spezifische Anpassung der Parameter somit häufig nicht anwendbar.

Viele Parameter sind außerdem voneinander abhängig, so dass eine einzelne Parameteränderung durch einen unerfahrenen Kunden mitunter zu einer Funktionsminderung des Feldgeräts führen kann

Druckschrift DE 10 2007 063312 A1 zeigt ein Parametriersystem und Verfahren zur Parametrierung eines Feldgeräts. Druckschrift WO 2006/069762 A1 zeigt ein Verfahren zur Konfiguration von Feldgeräten in einem Prozessautomatisierungssystem.

Der Erfindung liegt somit die Aufgabe zugrunde, ein Verfahren und ein System vorzustellen, um die Parametrierung und/oder Änderung von Parameterwerten eines Feldgeräts für den Kunden zu erleichtern.

Die Aufgabe wird durch ein Verfahren zur Optimierung der Bedienung von zumindest einem einer Vielzahl von Feldgeräten gemäß Patentanspruch 1 gelöst.

Durch das erfindungsgemäße Verfahren ist eine drastische Reduktion der Gesamtheit der Parameter eines Feldgeräts möglich. Für den Kunden wird dadurch die Parametrierung und/oder Änderung von Parameterwerten des Feldgeräts erleichtert. Feldgeräte, die im Zusammenhang mit der Erfindung beschrieben werden, sind in der Einleitung der vorliegenden Anmeldung beispielhaft beschrieben.

Als Applikation wird eine Anwendung innerhalb der Anlage oder einer Prozessstelle der Anlage bezeichnet, wie beispielsweise eine Durchflussmessung eines Mediums.

In einer vorteilhaften Ausgestaltung des erfindungsgemäßen Systems ist vorgesehen, dass die tatsächlich genutzten Parameter manuell optimiert werden. Dadurch ist eine benutzerspezifische Anpassung der einzelnen Parameter möglich.

In einer besonders vorteilhaften Ausgestaltung des erfindungsgemäßen Systems ist vorgesehen, dass Kommentare zu einzelnen Parametern der tatsächlich genutzten Parameter für spätere Nutzung als Hinweise bei Optimierung der tatsächlich genutzten Parameter erstellt und abgelegt werden. Dies erlaubt das Aufbauen eines Erfahrungsschatzes für alle Kunden, bzw. Nutzer eines jeweiligen Feldgerätes.

Eine bevorzugte Variante des erfindungsmäßen Verfahrens sieht vor, dass für den Fall, dass in den aktuellen Parametersätzen enthaltene Parameter voneinander abhängig sind, diese Parameter auf einen Basisparameter beschränkt werden, wobei der Basisparameter zu den tatsächlich genutzten Parametern hinzugefügt wird. Dadurch erfolgt eine weitere Reduzierung der Vielzahl von Parametern.

Des Weiteren wird die Aufgabe durch ein System zur Optimierung der Bedienung einer Vielzahl an Feldgeräten gemäß Patentanspruch 5 gelöst.

Eine vorteilhafte Ausgestaltung des erfindungsgemäßen Systems sieht vor, dass es sich bei den Applikationsinformationen Konfigurations-, Messverfahrens- und/oder Messaufgabendaten eines Feldgeräts handelt. Allgemein ausgedrückt stellen Applikationsinformationen jene Informationen dar, die ein Feldgerät in Bezug auf seine Applikation hinreichend beschreiben.

In einer besonders vorteilhaften Variante des erfindungsgemäßen Systems ist die entfernt angeordnete Datenbank und/oder die Recheneinheit mittels Cloud Computing WebServices erreichbar. Unter Cloud Computing wird in diesem Fall das Speichern von Daten in einem entfernten Rechenzentrum, in diesem Fall in einer entfernten Datenbank, beschrieben. Der Vorteil besteht darin, dass eine Zentralisierung der Datenbestände erfolgt, da jedes Feldgerät seine Daten in Form von Gerätetypen und Diagnosemeldungen auf diese Datenbank speichert.

In einer vorteilhaften Weiterbildung des erfindungsgemäßen Systems ist vorgesehen, dass in der Software eine zeitliche Verfolgung der Parameterhistorie der Vielzahl von Feldgeräten implementiert ist.

Eine besonders bevorzugte Ausgestaltung des erfindungsgemäßen Systems sieht vor, dass die Software auf der Recheneinheit, auf einem Computer des Benutzers und/oder auf jedem der Vielzahl der Feldgeräte implementiert ist. Der Zugriff der Software auf die Datenbank erfolgt über ein oder mehrere Netzwerke, an die die Recheneinheit, der Computer des Benutzers und/oder jedes der Vielzahl der Feldgeräte angeschlossen ist. Im Prinzip kann hierfür jedes gebräuchliche Protokoll eines WAN- oder LAN-Netzwerks verwendet werden. Es kann aber auch ein Feldbusnetzwerk der Automatisierungstechnik, wie Foundation Fieldbus®, Profibus®, HART®, Modbus®, etc. verwendet werden, das beispielsweise über ein Gateway mit dem Internet verbunden ist. Die Software kann auch als Applikationssoftware auf einem mobilen Endgerät, wie einem Smartphone oder einem Tablet befinden.

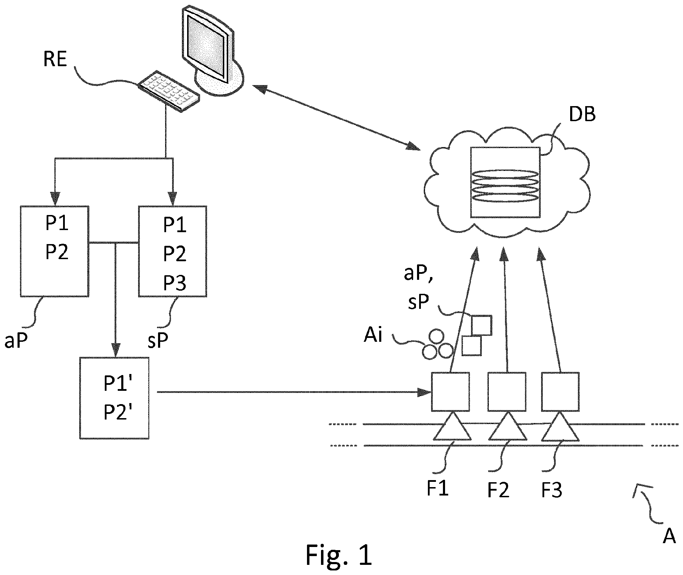

Die Erfindung wird anhand der nachfolgenden Figur näher erläutert. Es zeigt
Fig. 1: eine Ausgestaltung des erfindungsgemäßen Verfahrens zur Bedienung von zumindest einem einer Vielzahl von Feldgeräten in einer Anlage der Automatisierungstechnik.
Fig. 1 zeigt eine Ausgestaltung des erfindungsgemäßen Verfahrens zur Bedienung von zumindest einem einer Vielzahl von Feldgeräten F1, F2, F3 in einer Anlage A der Automatisierungstechnik.

Die Feldgeräte F1, F2, F3 befinden sich in derselben Anlage A und werden in derselben Applikation oder in voneinander verschiedenen Applikationen eingesetzt.

Beispielsweise handelt es sich hier bei Feldgerät F1 und Feldgerät F3 um Durchflussmesser nach dem Ultraschallprinzip, bei Feldgerät F2 um einen Temperaturfühler.

Von jedem der Feldgeräte F1, F2, F3 werden Applikationsinformationen Ai und der jeweilige Gerätetyp erhoben. Bei den Applikationsinformationen Ai handelt es sich insbesondere um Konfigurations-, Messverfahrens- und/oder Messaufgabendaten eines Feldgeräts, wie beispielsweise die Art des Mediums oder der Flanschgröße eines Messrohrs bei einem Durchflussmessgerät. Allgemein ausgedrückt stellen Applikationsinformationen Ai jene Informationen dar, die ein Feldgerät F1, F2, F3 in Bezug auf seine Applikation hinreichend beschreiben. Die Applikationsinformationen Ai werden direkt von den jeweiligen Feldgeräten F1, F2, F3 zu einer Datenbank DB gesendet und dort von der Datenbank DB gespeichert. Alternativ kann ein Teil der Applikationsinformationen Ai oder auch alle Applikationsinformationen Ai auch manuell in die Datenbank DB eingegeben werden, beispielsweise von einem Techniker, welcher ein Feldgerät F1, F2, F3 vor Ort in Betrieb nimmt. Eine weitere Alternative ist, dass eine Software, beispielweise eine Parametrierungssoftware, die Applikationsdaten Ai der Feldgeräte F1, F2, F3 ausliest und an die Datenbank DB sendet.

Bei der entfernt angeordnete Datenbank DB handelt es sich um eine Datenbank DB, die mittels Cloud Computing WebServices erreichbar ist. Unter Cloud Computing wird in diesem Fall das Speichern von Daten in einem entfernten Rechenzentrum, in diesem Fall in einer entfernten Datenbank DB, beschrieben. Der Vorteil besteht darin, dass eine Zentralisierung der Datenbestände erfolgt, da jedes Feldgerät F1, F2, F3 seine Daten in Form von Applikationsinformationen Ai auf diese Datenbank speichert.

Das Senden der Applikationsinformationen Ai an die Datenbank DB erfolgt über ein oder mehrere Netzwerke, an die jedes der Vielzahl der Feldgeräte angeschlossen ist. Im Prinzip kann hierfür jedes gebräuchliche Protokoll eines WAN- oder LAN-Netzwerks verwendet werden. Es kann aber auch ein Feldbusnetzwerk der Automatisierungstechnik, wie Foundation Fieldbus®, Profibus®, HART®, Modbus®, etc. verwendet werden, das beispielsweise über ein Gateway mit dem Internet verbunden ist.

Die auf der Datenbank DB gespeicherten Applikationsinformationen Ai werden anschließend von einer Recheneinheit RE klassifiziert. Ein Benutzer kann auf die Recheneinheit RE, wie schon auf die Datenbank DB, mittels Cloud Computing zugreifen. Der Zugriff erfolgt beispielsweise mittels einem internetfähigen Computer oder einem mobilen Endgerät, wie einem Tablet-PC oder einem Smartphone. Alternativ kann der internetfähige Computer des Benutzers, oder dessen mobiles Endgerät, die Rolle der Recheneinheit RE übernehmen, auf die Datenbank DB zugreifen und der Recheneinheit RE zugeordneten Aufgaben übernehmen.

Anschließend werden von den Feldgeräten F1, F2, F3 Parametersätze aP, sP erhoben. Auch hier können diese Parametersätze aP, sP von den jeweiligen Feldgeräten F1, F2, F3 selbst an die Datenbank DB gesendet werden, oder manuell in die Datenbank DB eingegeben werden. Auch bei diesem Schritt kann als weitere Alternative eine Software, beispielweise eine Parametrierungssoftware, die Parametersätze aP, sP der Feldgeräte F1, F2, F3 auslesen und an die Datenbank DB senden. Parametersätze aP, sP enthalten zumindest einen Parameter P1, P2, P3 und jedem Parameter P1, P2, P3 ist ein Parameterwert oder ein Parameterwertebereich zugeordnet. Bei den Parametersätzen aP, sP handelt es sich zum einen um die aktuellen Parametersätze aP, mit denen das jeweilige Feldgerät F1, F2, F3 betrieben wird, zum anderen um die werkseitig eingestellten und noch auf dem jeweiligen Feldgerät F1, F2, F3 gespeicherten Standardparametersätze sP. Die Parametersätze aP, sP werden von der Recheneinheit RE den jeweiligen auf der Datenbank DB gespeicherten Applikationsinformationen Ai zugeordnet und auf der Datenbank DB gespeichert.

Feldgeräte F1, F2, F3 besitzen mitunter eine sehr große Anzahl an verschiedenen Parametern P1, P2, P3. In der Praxis wird von einem Kunden in einer Applikation mitunter nur ein Bruchteil der Parameter P1, P2, P3 benötigt.

Um diesen Bruchteil der Parameter P1, P2, P3, im Folgenden als tatsächliche genutzte Parameter bezeichnet, eines Feldgeräts F1 bestimmen zu können, wird der aktuelle Parametersatz aP eines jeweiligen Feldgeräts F1, F2, F3 mit dem jeweiligen Standardparametersatz sP verglichen. Beispielsweise sind im werkseitig eingestellten Parametersatz qP die Parameter P1, P2, P3 definiert. Im aktuellen Parametersatz aP wurden gegenüber dem Standardparametersatz sP nur die Parameter P1, P2 belegt, für Parameter P3 ist der Wert des Standardparametersatzes sP zugeordnet.

Die tatsächlich genutzten Parameter sind in diesem Beispiel somit P1 und P2, diese werden fortan als tatsächlich genutzte Parameter P1', P2' bezeichnet. Diese Parameter P1', P2' werden in einem optimalen Parametersatz oP gespeichert. Der optimale Parametersatz oP ersetzt anschließend den aktuellen Parametersatz aP des Feldgeräts F1. Auf diese Weise ist es möglich, die Parametrierung eines Feldgeräts für einen Kunden wesentlich zu erleichtern, indem die Vielzahl an verfügbaren Parametern P1, P2, P3 auf die tatsächlich genutzten Parameter P1', P2' reduziert wird.

Falls ein oder mehrere zu einem ermittelten tatsächlich genutzten Parameter P1', P2' abhängige Parameter P1, P2, P3 existieren, können diese Parameter P1, P2, P3 auf einen Basisparameter beschränkt werden, wobei der Basisparameter zu den tatsächlich genutzten Parametern P1', P2' hinzugefügt wird

Die Parametrisierung des Feldgeräts F1, F2, F3 erfolgt über eine Software. Die Software kann sich dabei auf der Recheneinheit RE, auf einem Gerät des Kunden, wie einem Computer oder einem mobilen Endgerät, wie einem Tablet oder einem Smartphone, oder direkt auf jedem der Vielzahl der Feldgeräte F1, F2, F3 befinden.

Es versteht sich von selbst, dass das Verfahren auf jegliche Art und Anzahl von Feldgeräten F1, F2, F3 anwendbar ist und nicht auf die in dieser Ausgestaltung verwendeten Beispiele der Feldgeräte F1, F2, F3 und deren Parameter P1, P2, P3 beschränkt ist.

### Bezugszeichenliste

- A: Anlage
- Ai: Applikationsinformationen
- aP: aktueller Parametersatz
- DB: Datenbank
- F1, F2, F3: Feldgeräte
- P1, P2, P3: Parameter
- P1', P2': tatsächlich genutzte Parameter
- RE: Recheneinheit
- sP: Standardparametersatz

## Patentansprüche

1. Verfahren zur Optimierung der Bedienung von zumindest einem einer Vielzahl von Feldgeräten (F1, F2, F3) in einer Anlage (A) der Automatisierungstechnik, die in unterschiedlichen Applikationen eingesetzt sind, umfassend folgende Schritte:
- Erheben von Applikationsinformationen (Ai) und Gerätetypen der Vielzahl der Feldgeräte (F1, F2, F3), wobei die Applikationsinformationen (Ai) jedes der Vielzahl der Feldgeräte (F1, F2, F3) hinsichtlich seiner Applikation eindeutig beschreiben;
- Klassifizieren der Applikationsinformationen (Ai) der Vielzahl der Feldgeräte (F1, F2, F3) und Speichern der klassifizierten Applikationsinformationen (Ai);
- Erheben von Parametersätzen (aP, sP) von jedem der Vielzahl der Feldgeräte (F1, F2, F3), wobei die Parametersätze (aP, sP) aus mehreren Parametern (P1, P2, P3) bestehen und jedem Parameter (P1, P2, P3) ein Parameterwert oder ein Parameterwertebereich zugeordnet ist und jedes Feldgerät zumindest einen aktuellen Parametersatz (aP) und zumindest einen Standardparametersatz (sP) besitzt, und Speichern der Parametersätze (aP, sP);
- Vergleichen des aktuellen Parametersatzes (aP) eines jeden Feldgeräts (F1, F2, F3) mit dem dem jeweiligen Standardparametersatz (sP) zwecks Ermittlung tatsächlich genutzter Parameter (P1' P2') eines Gerätetyps für eine Applikation, wobei die tatsächlich genutzten Parameter (P1', P2') jene Parameter eines aktuellen Parametersatzes (aP) sind, welche gegenüber dem jeweiligen Standardparametersatz (sP) belegt worden sind;
- Speichern der tatsächlich genutzten Parameter (P1', P2') von einem der Vielzahl der Feldgeräte in einen optimalen Parametersatz (oP);
- Ersetzen des aktuellen Parametersatzes (aP) des Feldgeräts (F1, F2, F3) mit dem optimalen Parametersatz (oP);
- Bedienen des Feldgeräts (F1) auf der Basis der tatsächlich genutzten Parameter (P1', P2').

2. Verfahren nach Anspruch 1, wobei die tatsächlich genutzten Parameter (P1', P2') manuell optimiert werden.

3. Verfahren nach Anspruch 2, wobei Kommentare zu einzelnen Parametern der tatsächlich genutzten Parameter (P1', P2') für spätere Nutzung als Hinweise bei Optimierung der tatsächlich genutzten Parameter (P1', P2') erstellt und abgelegt werden.

4. Verfahren nach einem der vorherigen Ansprüche, wobei für den Fall, dass in den aktuellen Parametersätzen (aP) enthaltene Parameter (P1, P2, P3) voneinander abhängig sind, diese Parameter (P1, P2, P3) auf einen Basisparameter beschränkt werden, wobei der Basisparameter zu den tatsächlich genutzten Parametern (P1', P2') hinzugefügt wird.

5. System zur Optimierung der Bedienung von zumindest einem einer Vielzahl an Feldgeräten (F1, F2, F3)) in einer Anlage (A) der Automatisierungstechnik, das zur Durchführung des Verfahrens nach zumindest einem der Ansprüche 1 bis 4 ausgestaltet ist, zumindest umfassend
- eine Datenbank (DB) zum Speichern von Applikationsinformationen und Gerätetypen der Vielzahl der Feldgeräte (F1, F2, F3) und zum Speichern von Parametersätzen (aP, sP) der Vielzahl von Feldgeräten (F1, F2, F3);
- eine elektronische Recheneinheit (RE), die auf die entfernt angeordnete Datenbank (DB) zugreift und die dort gespeicherten Daten klassifiziert, zuordnet, vergleicht und/oder bearbeitet;
- eine Software zum Bedienen der elektronischen Recheneinheit (RE).

6. System nach Anspruch 5, wobei es sich bei den Applikationsinformationen um Konfigurations-, Messverfahrens- und/oder Messaufgabendaten eines Feldgeräts (F1, F2, F3) handelt.

7. System nach zumindest einem der Ansprüche 5 oder 6, wobei die entfernt angeordnete Datenbank (DB) und/oder die Recheneinheit (RE) mittels Cloud Computing WebServices erreichbar ist.

8. System nach zumindest einem der Ansprüche 5 bis 7, wobei in der Software eine zeitliche Verfolgung der Parameterhistorie der Vielzahl von Feldgeräten (F1, F2, F3) implementiert ist.

9. System nach zumindest einem der Ansprüche 5 bis 8, wobei die Software auf der Recheneinheit (RE), auf einem Computer des Benutzers und/oder auf jedem der Vielzahl der Feldgeräte (F1, F2, F3) implementiert ist.

## Claims

1. Method for optimizing the operation of at least one field device among multiple field devices (F1, F2, F3) in an automation engineering installation (A), which are used in different applications, said method comprising the following steps:
- Collection of application information (Ai) and device types of the multiple field devices (F1, F2, F3), wherein the application information (Ai) uniquely describes each of the multiple field devices (F1, F2, F3) with regard to its application;
- Classification of the application information (Ai) of the multiple field devices (F1, F2, F3) and storage of the classified application information (Ai);
- Collection of parameter sets (aP, sP) from each field device among the multiple field devices (F1, F2, F3), wherein the parameter sets (aP, sP) consist of multiple parameters (P1, P2, P3) and wherein a parameter value or a parameter value range is assigned to each parameter (P1, P2, P3) and every field device has at least a current parameter set (aP) and at least a standard parameter set (sP), and storage of the parameter sets (aP, sP);
- Comparison of the current parameter set (aP) of each field device (F1, F2, F3) with the respective standard parameter set (sP) for the purpose of determining parameters actually used (P1', P2') of a device type for an application, wherein the parameters actually used (P1', P2') are the parameters of a current parameter set (aP) which have been allocated compared to the respective standard parameter set (sP);
- Storage of the parameters actually used (P1', P2') of one of the multiple field devices in an optimum parameter set (oP);
- Replacement of the current parameter set (aP) of the field device (F1, F2, F3) with the optimum parameter set (oP).
- Operation of the field device (F1) on the basis of the parameters actually used (P1', P2').

2. Method as claimed in Claim 1, wherein the parameters actually used (P1', P2') are optimized manually.

3. Method as claimed in Claim 2, wherein comments on the individual parameters of the parameters actually used (P1', P2') are created and saved for later use as information for the optimization of the parameters that are actually used (P1', P2').

4. Method as claimed in one of the previous claims, wherein in the event that parameters (P1, P2, P3) contained in the current parameter sets (aP) are interdependent, these parameters (P1, P2, P3) are limited to a basic parameter, wherein the basic parameter is added to the parameters that are actually used (P1', P2').

5. System for optimizing the operation of at least one field device among several field devices (F1, F2, F3) in an automation engineering installation (A), said system being equipped to carry out the method as claimed in at least one of the Claims 1 to 4 and comprising at least
- a database (DB) to save application information and device types of the multiple field devices (F1, F2, F3) and to save parameter sets (aP, sP) of the multiple field devices (F1, F2, F3);
- an electronic computing unit (RE), which accesses the database (DB) arranged remotely and classifies, assigns, compares and/or processes the data saved in the database;
- a software to operate the electronic computing unit (RE).

6. System as claimed in Claim 5, wherein the application information refers to configuration data, measurement process data and/or measurement task data of a field device (F1, F2, F3).

7. System as claimed in at least one of the Claims 5 or 6, wherein the database (DB) arranged remotely and/or the computing unit (RE) is/are accessible using cloud computing web services.

8. System as claimed in at least one of the Claims 5 to 7, wherein tracking, over time, of the parameter history of the multiple field devices (F1, F2, F3) is implemented in the software.

9. System as claimed in at least one of the Claims 5 to 8, wherein the software is implemented on the computing unit (RE), on a computer of the user and/or on each of the multiple field devices (F1, F2, F3).

## Revendications

1. Procédé destiné à l'optimisation de l'exploitation d'au moins un appareil de terrain parmi une pluralité d'appareils de terrain (F1, F2, F3) dans une installation (A) de la technique d'automatisation, lequel procédé est utilisé dans différentes applications et comprend les étapes suivantes :
- Collecte des informations d'application (Ai) et des types d'appareil de la pluralité d'appareils de terrain (F1, F2, F3), les informations d'application (Ai) décrivant de manière unique chaque appareil parmi la pluralité d'appareils de terrain (F1, F2, F3) en ce qui concerne son application ;
- Classification des informations d'application (Ai) de la pluralité d'appareils de terrain (F1, F2, F3) et stockage des informations d'application (Ai) classifiées ;
- Collecte des jeux de paramètres (aP, sP) à partir de chaque appareil de terrain parmi la pluralité d'appareils de terrain (F1, F2, F3), les jeux de paramètres (aP, sP) consistant en une pluralité de paramètres (P1, P2, P3) et chaque paramètre (P1, P2, P3) étant associé à une valeur de paramètre ou à une plage de valeurs de paramètre et chaque appareil de terrain possédant au moins un jeu de paramètres actuel (aP) et au moins un jeu de paramètres standard (sP), et stockage des jeux de paramètres (aP, sP) ;
- Comparaison du jeu de paramètres actuel (aP) de chaque appareil de terrain (F1, F2, F3) avec le jeu de paramètres standard respectif (sP) afin de déterminer les paramètres réellement utilisés (P1', P2') d'un type d'appareil pour une application, les paramètres réellement utilisés (P1', P2') étant les paramètres d'un jeu de paramètres actuel (aP) qui ont été occupés par rapport au jeu de paramètres standard respectif (sP) ;
- Enregistrement des paramètres réellement utilisés (P1', P2') d'un appareil de terrain parmi la pluralité d'appareils de terrain dans un jeu de paramètres optimal (oP) ;
- Remplacement du jeu de paramètres actuel (aP) de l'appareil de terrain (F1, F2, F3) par le jeu de paramètres optimal (oP) ;
- Exploitation de l'appareil de terrain (F1) sur la base des paramètres réellement utilisés (P1', P2').

2. Procédé selon la revendication 1, pour lequel les paramètres réellement utilisés (P1', P2') sont optimisés manuellement.

3. Procédé selon la revendication 2, pour lequel des commentaires sur les différents paramètres des paramètres réellement utilisés (P1', P2') sont créés et stockés pour être utilisés ultérieurement en tant qu'indications pour l'optimisation des paramètres réellement utilisés (P1', P2').

4. Procédé selon au moins l'une des revendications précédentes, pour lequel dans le cas où des paramètres (P1, P2, P3) contenus dans les jeux de paramètres actuels (aP) sont interdépendants, ces paramètres (P1, P2, P3) sont limités à un paramètre de base, le paramètre de base étant ajouté aux paramètres réellement utilisés (P1', P2').

5. Système destiné à l'optimisation de l'exploitation d'au moins un appareil de terrain parmi une pluralité d'appareils de terrain (F1, F2, F3) dans une installation (A) de la technique d'automatisation, lequel système est conçu pour exécuter le procédé selon au moins l'une des revendications 1 à 4 et comprend au moins
- une base de données (DB) destinée au stockage des informations d'application et des types d'appareil de la pluralité d'appareils de terrain (F1, F2, F3) et au stockage des jeux de paramètres (aP, sP) de la pluralité d'appareils de terrain (F1, F2, F3) ;
- une unité de calcul électronique (RE), qui accède à la base de données (DB) disposée à distance et classifie, associe, compare et/ou traite les données qui y sont stockées ;
- un logiciel destiné à exploiter l'unité de calcul électronique (RE).

6. Système selon la revendication 5, pour lequel il s'agit, concernant les informations d'application, des données de configuration, des données de procédé de mesure et/ou des données de tâche de mesure d'un appareil de terrain (F1, F2, F3).

7. Système selon au moins l'une des revendications 5 ou 6, pour lequel la base de données (DB) disposée à distance et/ou l'unité de calcul (RE) sont/est accessible(s) au moyen de services Web de cloud computing.

8. Système selon au moins l'une des revendications 5 à 7, pour lequel un suivi temporel de l'historique des paramètres de la pluralité d'appareils de terrain (F1, F2, F3) est implémenté dans le logiciel.

9. Système selon au moins l'une des revendications 5 à 8, pour lequel le logiciel est implémenté sur l'unité de calcul (RE), sur un ordinateur de l'utilisateur et/ou sur chaque appareil de terrain de la pluralité d'appareil de terrain (F1, F2, F3).
